Europäisches Patentamt

European Patent Office

Office européen des brevets

(11) Veröffentlichungsnummer: **0 135 033**
**A1**

# (12) EUROPÄISCHE PATENTANMELDUNG

(21) Anmeldenummer: **84108512.9**

(22) Anmeldetag: **19.07.84**

(51) Int. Cl.⁴: **B 01 D 53/34**

(30) Priorität: **23.07.83 DE 3326639**

(43) Veröffentlichungstag der Anmeldung:
**27.03.85  Patentblatt 85/13**

(84) Benannte Vertragsstaaten:
**BE DE FR GB IT NL**

(71) Anmelder: **HOECHST AKTIENGESELLSCHAFT**
**Postfach 80 03 20**
**D-6230 Frankfurt am Main 80(DE)**

(72) Erfinder: **Semel, Joachim, Dr.**
**Sodener Strasse 30**
**D-6233 Kelkheim(DE)**

(72) Erfinder: **Vilcsek, Herbert, Dr.**
**Eichenweg 17**
**D-6200 Wiesbaden(DE)**

(72) Erfinder: **Wolstein, Dr.**
**Goethestrasse 66**
**D-4300 Essen(DE)**

(54) Verfahren zur Verminderung des Stickstoffdioxidgehaltes von Gasgemischen.

(57) Verfahren zur Verminderung des Gehalts an Stickstoffdioxid in Abgasgemischen aus der Salpetersäureproduktion, dadurch gekennzeichnet, daß man dem Abgas $(C_2-C_5)$-Alkene zuführt und dieses Gasgemisch bei Temperaturen zwischen 30° und 230°C über einen Edelmetall-Katalysator leitet.

Croydon Printing Company Ltd.

## Verfahren zur Verminderung des Stickstoffdioxidgehaltes von Gasgemischen

Gegenstand der Erfindung ist ein Verfahren zur Verminderung des Stickstoffdioxidgehalts von Gasgemischen, insbesondere solchen, wie sie bei der Salpetersäureproduktion nach dem Ostwald-Verfahren (katalytische Ammoniakverbrennung) anfallen.

Es ist bekannt, daß der Stickoxidgehalt im Abgas von Salpetersäurefabriken durch katalytische Reduktion mit Ammoniak als Reduktionsmittel stark vermindert werden kann. Die vielen hierzu beschriebenen Verfahren (vgl. Ullmann, Enzyklopädie der technischen Chemie, Band 20, S. 329, 330, 4. Aufl. (1981)) arbeiten bei Temperaturen oberhalb 200°C. Niedrigere Temperaturen sind schon deshalb ausgeschlossen, da hierbei Ammoniumnitrat bzw. Ammoniumnitrit entstehen kann, die sich in den Abluftanlagen ablagern können. Hierdurch entsteht eine hohe Explosionsgefahr, s. Ullmann, ebd. S. 328.

Es ist weiterhin bekannt, daß der Stickoxidgehalt in Abgasen durch katalytische Nachverbrennung gesenkt werden kann. Dabei wirken im Abgas enthaltene Brenngase wie Kohlenmonoxid oder unverbrannte Kohlenwasserstoffe (bei der Automobilabgasentgiftung) oder zusätzlich hinzugegebene Brenngase wie Wasserstoff, Erdgas reduzierend auf die Stickoxide. Die Verwendung von Erdgas scheidet für den Einsatz bei der Salpetersäureproduktion aus, da hierbei große Mengen an Kohlenmonoxid entstehen und die Verbrennung von Methan nicht vollständig verläuft, s. Ullmann, ebd. S. 329.

Es ist ebenfalls bekannt, Stickstoffdioxid mit Ethylen in Gegenwart von Kupfer-Siliciumdioxid-Katalysatoren zu reduzieren. Für dieses Verfahren sind jedoch Temperaturen von mehr als 270°C erforderlich.

Überraschenderweise wurde nun gefunden, daß Stickstoffdioxid, wie es bei der Salpetersäureproduktion anfällt, unter Verwendung von niederen Olefinen in Gegenwart von Edelmetallkatalysatoren unterhalb von 200°C reduziert werden kann.

Gegenstand der vorliegenden Erfindung ist daher ein Verfahren zur Verminderung des Gehalts an Stickstoffdioxid in Abgasgemischen aus der Salpetersäureproduktion, dadurch gekennzeichnet, daß man dem Abgas $(C_2-C_5)$-Alkene zuführt, und dieses Gasgemisch bei Temperaturen zwischen 30° und 230°C über einen Edelmetall-Katalysator leitet.

Für das erfindungsgemäße Verfahren eignen sich bevorzugt Ethylen und Propylen, insbesondere Ethylen.

Als Edelmetall-Katalysatoren eignen sich besonders Katalysatoren der Platin-Gruppe auf Aluminiumoxid als Trägerstoff.

Die erforderliche Reaktionstemperatur richtet sich nach der Aktivität des verwendeten Katalysators und liegt insbesondere zwischen 120° und 190°C.

Die erforderliche Olefinmenge richtet sich nach der Aktivität des verwendeten Katalysators, sowie nach der im Abgas enthaltenen Stickstoffdioxidmenge. Im Falle von Ethylen beträgt der Ethylenmolenstrom üblicherweise 1/6 bis 2/3 des Stickstoffdioxid-Molenstroms.

Als Reaktor können alle für heterogen-katalysierte Prozesse übliche Reaktoren verwendet werden. Es ist günstig, eine Raumgeschwindigkeit des Gasgemisches im Lerrrohr von 5000 $h^{1-}$ bis 20 000 $h^{-1}$ einzuhalten.

Das für das erfindungsgemäße Verfahren einsetzbare Abgasgemisch aus der Salpetersäureproduktion nach dem Ostwald-Verfahren kann bis zu 0,500 Vol.-% $NO_x$ (gerechnet als NO) enthalten, wovon bis zu 60 % als Stickstoffdioxid vorliegen können. Nach dem erfindungsgemäßen katalytischen Prozeß weist das Abgasgemisch lediglich einen Gehalt von $\leq$ 100 ppm entsprechend einem Zersetzungsgrad des Stickstoffdioxids von $\geq$ 80 % auf.

Nachfolgende Beispiele dienen zur Erläuterung der Erfindung.

Beispiel 1

In einer drucklosen Apparatur bestehend aus einer Gasdosierungsvorrichtung, einem Gaserhitzer und einer Katalysatorschüttung (d = 100 mm, l = 100 mm, Platin auf Aluminiumoxid Katalysator Typ KCO 1934 K/M der Fa. Kali Chemie) werden 5,4 m³/h einer Gasmischung aus 97,5 Vol. % Stickstoff und 2,5 Vol. % Sauerstoff mit 0,12 mol/h Stickstoffdioxid (entspricht 500 ppm) und 0,06 mol/h Ethylen versetzt, auf 160°C erhitzt und über den Katalysator geführt. Die Analyse des Abgasstromes ergibt eine Zersetzung des Stickstoffdioxids von 85 - 95 % (d.h. der Restgehalt an $NO_2$ beträgt ca. 50 ppm.)

## Beispiel 2

Verfährt man analog der in Beispiel 1 beschriebenen Verfahrensweise und arbeitet mit verdoppelten Gas- und Molenströmen, ergibt sich ein Zersetzungsgrad des Stickstoffdioxids von 80 - 90 % .

## Beispiel 3

Verwendet man in der in Beispiel 1 beschriebenen Apparatur den Platin auf Aluminiumoxid Katalysator Typ KCO 1934 KID der Fa. Kali-Chemie und dosiert in das in Beispiel 1 beschriebene Gasgemisch 0.04 mol/h Ethylen bei 160°C, so erhält man ein Abgas mit einer Stickstoffdioxidkonzentration von ca. 50 ppm, d.h. einen Zersetzungsgrad von 85 - 90 %.

## Beispiel 4

Verwendet man die Apparatur aus Beispiel 1, den Katalysator aus Beispiel 3 und erhöht man in dem unter 1 beschriebenen Gasgemisch die Stickstoffdioxidmenge auf 0.24 mol/h (entspricht 1000 ppm) sowie die Ethylenmenge auf 0.08 mol/h, so erhält man bei 160°C nach der katalytischen Umsetzung einen Restgehalt an Stickstoffdioxid von ca. 30 ppm, d.h. einen Zersetzungsgrad von 95 - 98 %.

## Beispiel 5

In einem Rohrreaktor (d = 100 mm, l = 600 mm), der mit 3,9 l des Katalysators aus Beispiel 3 (Schütthöhe 500 mm) gefüllt ist, werden 40 m³/h im Normzustand eines Abgases aus der Salpetersäureproduktion mit einem Gehalt von 500 ppm Stickstoffmonoxid, 200 ppm Stickstoffdioxid und 2.5 Vol-% Sauerstoff bei einem Druck von 3.5 bar und einer Temperatur von 155 - 160°C mit 4 1/h im Normzustand Ethylen (100 ppm) zur Reaktion gebracht. Man erhält eine Absenkung der Stickstoffdioxidkonzentration auf 40 ppm, d.h. einen Zersetzungsgrad von 80 %.

## Beispiel 6

Arbeitet man in der Apparatur aus Beispiel 5 und mit 20 m³/h im Normzustand des in Beispiel 5 beschriebenen Gasgemisches, so werden bei 3.5 bar und 135 - 140°C 80 % des Stickstoffdioxides durch 2 1/h im Normzustand Ethylen zersetzt.

Patentansprüche:

1. Verfahren zur Verminderung des Gehalts an Stickstoffdioxid in Abgasgemischen aus der Salpetersäureproduktion, dadurch gekennzeichnet, daß man dem Abgas $(C_2-C_5)$-Alkene zuführt und dieses Gasgemisch bei Temperaturen zwischen 30° und 230°C über einen Edelmetall-Katalysator leitet.

2. Verfahren gemäß Anspruch 1, dadurch gekennzeichnet, daß man aus Katalysator ein Edelmetall der Platin- .Gruppe auf Aluminiumoxid als Trägerstoff einsetzt.

3. Verfahren gemäß Ansprüchen 1 und 2, dadurch gekennzeichnet, daß man einen Platin-Aluminiumoxidkatalysator einsetzt.

4. Verfahren gemäß Ansprüchen 1 bis 3, dadurch gekennzeichnet, daß man dem Abgas Ethylen zuführt.

5. Verfahren gemäß Ansprüchen 1 bis 4, dadurch gekennzeichnet, daß man Temperaturen im Bereich von 120° bis 190°C verwendet.

6. Verfahren gemäß Ansprüchen 1 bis 5, dadurch gekennzeichnet, daß man Ethylen in einer Molmenge von 1/6 bis 2/3 der Molmenge des Stickstoffdioxids zuführt.

7. Verwendung von $(C_2-C_5)$-Alkenen in Gegenwart von Edelmetall-Katalysatoren bei Temperaturen zwischen 30° und 230°C zur Verringerung des Stickstoffdioxid-Gehaltes von Abgasgemischen aus der Salpetersäureproduktion.

**0135033**

Nummer der Anmeldung

EP    84 10 8512

Europäisches
Patentamt

**EUROPÄISCHER RECHERCHENBERICHT**

| | **EINSCHLÄGIGE DOKUMENTE** | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| X | DE-A-2 541 165  (TOA NENRYO KOGYO K.K.)<br>* Ansprüche 1,2,6; Tabellen 1-3 * | 1-4,6, 7 | B 01 D   53/34 |
| | --- | | |
| A | BE-A-  787 052  (SUMITOMO CHEMICAL CO.LTD.)<br>* Ansprüche 1,2,5,8,9 * | 1-3,7 | |
| | ----- | | |

RECHERCHIERTE
SACHGEBIETE (Int. Cl.4)

B 01 D   53/00
C 01 B   21/00

Der vorliegende Recherchenbericht wurde für alle Patentansprüche erstellt.

| Recherchenort | Abschlußdatum der Recherche | Prüfer |
|---|---|---|
| BERLIN | 28-11-1984 | BERTRAM H E H |